# EUROPEAN PATENT SPECIFICATION

(11) **EP 2 539 609 B1**
(45) Date of publication and mention of the grant of the patent: **04.11.2015**
(21) Application number: 11705246.4
(22) Date of filing: 22.02.2011
(51) Int. Cl.: F16H 57/04, F16H 61/00

(54) **FLUID SUPPLY FOR CONTINUOUSLY VARIABLE TRANSMISSION**
FLÜSSIGKEITSLIEFERUNG FÜR STUFENLOSES GETRIEBE
ALIMENTATION DE FLUIDE POUR TRANSMISSION À VARIATION CONTINUE

(30) Priority: 24.02.2010 GB 201003099
(43) Date of publication of application: 02.01.2013
(73) Proprietor: Torotrak (Development) Limited, Leyland, Lancashire PR26 7UX (GB)
(72) Inventor: FULLER, John William Edward, Preston Lancashire PR1 BDX (GB)
(74) Representative: Mackenzie, Andrew Bryan
(86) International application number: PCT/GB2011/050340
(87) International publication number: WO 2011/104533

(56) References cited:
- WO-A1-02/079675
- WO-A1-02/099317
- US-A- 5 938 557

## Description

The present invention concerns an arrangement for supplying fluid to a continuously variable transmission.

Continuously variable transmissions (to be abbreviated below to "CVTs") typically incorporate:
i. a variator, which is a device having a rotary input and a rotary output, and a mechanism for transmitting drive between the two at a variator ratio (the ratio of the variator's input speed to its output speed) which is steplessly variable;
ii. associated gearing by which the variator is coupled between a transmission input (connected for example to a driver such as an engine) and a transmission output (which may for example be a propshaft coupled to driven wheels of a motor vehicle). The variator ratio governs the transmission ratio (the ratio of the transmission's input speed to its output speed) but need not be equal to it, thanks to the gearing; and
iii. a clutch arrangement incorporated in the said gearing. In one simple example, a clutch may simply serve to engage/disengage the transmission output. More sophisticated transmissions may (as is known in the art) provide for multiple "regimes" in each of which the relationship between the variator ratio and the overall transmission ratio is different, thereby expanding the range of transmission ratios beyond the range provided by the variator alone.

Commonly both the variator and the clutches are hydraulically controlled, in which case there are multiple systems that need to be supplied with fluid:
a. a lubrication system. The variator itself requires lubrication. In so-called "rolling traction" type variators, for example, the mechanism for steplessly varying variator ratio incorporates rotary parts (such as the roller and race of a toroidal transmission, to be discussed below) between which drive is transmitted by shear of a thin film of fluid, maintained by continuously jetting the fluid onto the said parts. Other parts of the transmission, including its gearing, also typically need lubrication. High pressure is not required but the fluid flow needs to be largely continuous and at a flow rate that is for much of the time higher than that required by the transmission's other systems.
b. a variator control system. Commonly the variator is controlled by application to it of an adjustable hydraulic pressure (in some cases two opposed pressure signals are used). The pressure required is variable, and can be large. The flow required is also highly variable. It may fall to zero while variator ratio is constant and can for brief periods be large, when rapid change of variator/transmission ratio is needed. In variators of the known "torque controlled" type, variator ratio is able to vary automatically in accordance with external factors (such as vehicle braking, for example) and the flow requirement therefore cannot be set nor forecast by electronics controlling the transmission. Rolling traction type variators often have a hydraulic actuator to bias the rolling components (e.g. the roller and races of the toroidal type variator) into engagement with one another, which again requires a supply of pressurised hydraulic fluid.
c. the clutch arrangement, which consumes fluid flow particularly during changes of clutch state. In some transmissions the pressure applied to the clutch arrangement may vary even while a clutch is engaged. In this way the clutch can be maintained in a state in which it is constantly prepared to slip if the torque applied to it suffers an unexpected spike. This provides protection from such torque spikes for the variator itself.

Commonly the same fluid is used both for hydraulics and lubrication. It may in particular be an oil. The term "fluid" is used herein merely to refer to the oil or other liquid used in this context.

It is very important to maximise energy efficiency of the transmission. To this end the energy consumed by the fluid supply (typically formed by a pump) needs to be minimised, whilst satisfying the requirements of all of the transmission's individual systems.

In some known hydraulic circuits for CVT control, a single pump supplies all of the systems. It may for example supply fluid to the variator control system and the clutch arrangement directly, with fluid exhausted from those systems being supplied, to the lubrication system. However operating the single pump at the pressure required by the variator and clutches, and at the high flow rate required for lubrication, can result in unnecessary energy usage. Another option is to use two separate pumps, one of which supplies low pressure and relatively high flow to the lubrication system while the other supplies the clutch arrangement and the variator control system. In this case the second mentioned pump needs to be of sufficient capacity to supply the highest flow drawn by the clutch arrangement and the variator control system, so that much of its capacity is unused other than at times of peak flow.

The closest prior art document WO02/079675 describes a variator having hydraulic end load means which provides an end-load to bias the variator discs towards each other by supply of a fluid. The roller actuators are connected to reaction pressure supply means whereby an adjustable reaction force may be applied to the rollers. Hydraulically influenced valve means maintain a relationship between end load and reaction pressures.

In accordance with the present invention, there is an apparatus for supplying fluid to a continuously variable transmission having a lubrication system and at least one transmission control system, the apparatus comprising first and second pumps, the first pump having an output which is connectable to the lubrication system through a supply control valve arrangement and the second pump having an output which is connectable to the transmission control system characterized in that, the apparatus further comprising a transfer passage through which the first pump is connectable to the transmission control system, and the supply control valve arrangement being adapted to selectively throttle fluid supply from the output of the first pump to the lubrication system in order to cause fluid output from the first pump to be diverted through the transfer passage to the transmission control system.

The invention allows efficient use to be made of the capacity of the two pumps. The second pump will typically be required to operate at high pressure for more of the time than the first pump. It can be specified to be of relatively small capacity. Preferably both pumps are capable of supplying the maximum required fluid pressure. The output of the first pump can, by virtue of the invention, augment that of the second when necessary in order to provide high rates of transient flow to the clutch arrangement or the variator control system.

Preferably, the transfer passage incorporates a transfer valve which permits fluid to flow from the output of the first pump toward the variator control system but not in the opposite direction. Other arrangements are possible, e.g. using a solenoid valve to control the transfer passage.

It is particularly preferred that the supply control valve arrangement receives first and second opposed control inputs, the first control input corresponding to the pressure output from the second pump and the second control input corresponding to a working pressure of the transmission control system, the supply control valve arrangement being adapted, by throttling fluid supply from the output of the first pump to the lubrication system in dependence upon its control inputs, to maintain the pressure output from the second pump at a level above the said working pressure of the transmission control system.

In such an embodiment, there is preferably provided an arrangement of valves and passages adapted to sample fluid pressure at multiple points in the transmission control system and to select the largest of the sampled pressures to form the second control input to the supply control valve arrangement.

A practical transmission typically has at least two transmission control systems-(a) a clutch arrangement and (b) a variator control system.

Preferably, pressure supplied to the clutch arrangement is prioritised. To this end, the clutch arrangement may have a supply passage which is constantly connected to the output of the second pump. The variator control system may be connectable to the second pump through the supply control valve arrangement. In this way provision can be made to throttle supply to the variator control system where necessary in order to maintain supply of pressure to the clutch arrangement.

The apparatus preferably further comprises an auxiliary passage for conducting fluid output from the second pump to the lubrication system.

Preferably, the supply control valve arrangement is adapted to selectively throttle the auxiliary passage in order to sustain pressure to the clutch arrangement.

Preferably, the variator control system is connectable to the second pump through the supply control valve arrangement, the supply control valve arrangement being adapted, in order to sustain pump pressure for the clutch arrangement, to throttle firstly the supply of fluid to the lubrication system and secondly, where necessary, the supply of fluid to the variator control system.

It is particularly preferred that the supply control valve arrangement is adapted to sustain a positive margin between the output pressure of the second pump and a working pressure of the transmission control system. The valve arrangement preferably comprises a single pilot controlled valve.

Specific embodiments of the present invention will now be described, by way of example only, with reference to the accompanying drawings, in which:
Figure 1 is a highly simplified representation of a variator suitable for use in embodiments of the invention. This type of variator is in itself known in the art;
Figure 2 is a somewhat simplified diagram of a hydraulic circuit for controlling a CVT;
Figures 3a to 3d are each diagrams of a fluid supply arrangement for use with the circuit of Figure 2, the different diagrams showing the fluid supply arrangement under different operating conditions;
Figure 4 is a schematic diagram of the fluid supply arrangement.

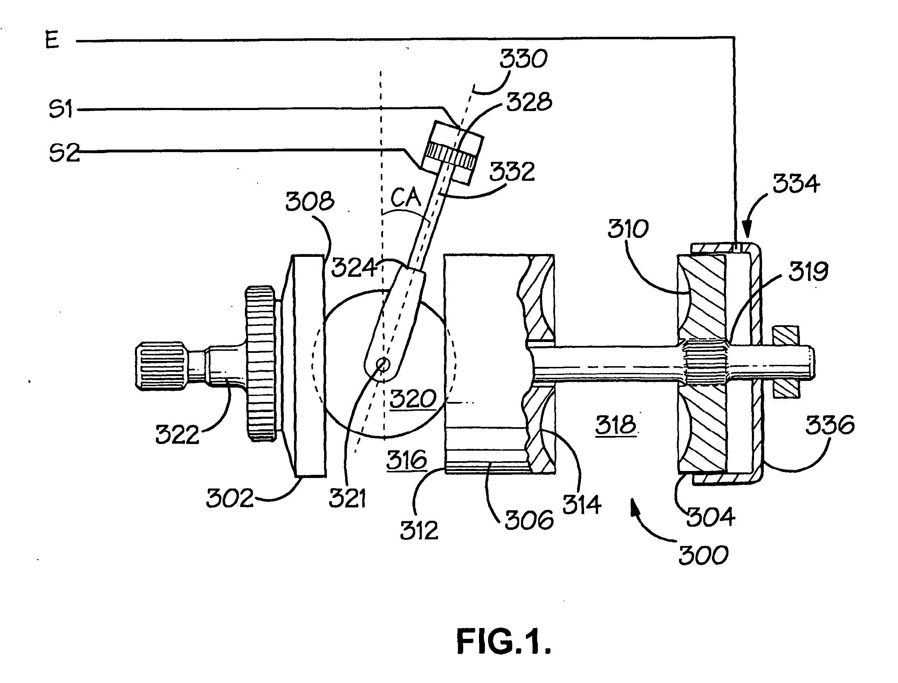

The variator 300 represented in Figure 1 is known in the art and is presented here for the sake of completeness and because its mode of operation creates some of the technical challenges that are addressed by the present invention. Note however that it is presented by way of example rather than limitation. The present invention may be implemented in transmissions using variators of other types. Variator 300 is of toroidal race, rolling traction type, having coaxially mounted input races 302, 304 on either side of a central output race 306. Faces 308, 310 of the respective input races are semi-toroidally recessed and directed toward respective, similarly recessed faces 312, 314 of the output races, defining two generally toroidal cavities 316, 318 containing rollers 320. Only one roller is shown but a practical variator typically has two or three such rollers spaced about each cavity 316, 318 at circumferential intervals. The races are mounted upon a variator shaft 322 but while the input races 302, 304 are secured to the shaft to rotate along with it (input race 304 being secured through splines 319 which allow it some movement along the shaft) the output race 306 is free to rotate about the shaft, e.g. by virtue of a bearing (not shown).

Each roller 320 runs upon the input and output races to transmit drive between them and each is able to move back and forth along a circumferential direction about a variator axis defined by the variator shaft 322. Each roller is also able to tilt. That is, the roller's axis (which is perpendicular to the plane of the paper in Figure 1 and is indicated at 321) is able to turn, changing the inclination of the roller axis to the variator axis. In the illustrated example, these motions are provided for by rotatably mounting the roller 320 in a carrier 324 coupled by a stem 326 to a piston 328 of a roller control actuator 330. A line 332 from the centre of the piston 328 to the centre of the roller 320 constitutes a tilt axis about which the whole assembly can turn. Tilting motion of the roller results in changes of the radii of the paths traced upon the races 302, 304, 306 by the roller, and hence in changes of variator ratio.

Note that in this example the tilt axis 332 does not lie in a plane perpendicular to the common axis of the races 302, 304, but is instead inclined to this plane. The angle of inclination is labelled CA in the drawing, and is known as the "castor angle". As the roller moves back and forth it follows a circular path centred upon the variator axis. Furthermore the action of the races 302, 304, 306 upon the roller creates a steering moment which tends to cause it to tilt such that the roller axis 321 is maintained in intersection with the variator axis. This intersection of the axes can be maintained, despite movement of the roller back and forth along its circular path, by virtue of the castor angle. The result is that the position of the roller along its path corresponds to a certain roller tilt and hence to a certain variator drive ratio.

The roller control actuator 330 receives opposed hydraulic fluid pressures through lines S1, S2. The force thus created urges the roller along its circular path about the variator axis, and at equilibrium it is balanced by forces exerted upon the roller by the races 302, 304, 306. The force exerted by the races on each of the rollers is proportional to the sum of the torques externally applied to the variator races. This sum - the variator input torque plus the variator output torque - is the net torque that must be reacted to the variator's mountings, and is referred to as the reaction torque. By regulating the pressures applied through the lines S1 and S2, reaction torque is thus directly regulated. Note that whereas it is common to assume that a transmission will be controlled to provide a specified transmission ratio, the illustrated variator can instead be "torque controlled" - i.e. controlled to provide a particular reaction torque. In this case, changes of variator/transmission ratio take place automatically in response to changes which affect the torque balance at the transmission's input and output. For example, if a vehicle driver brakes abruptly, the variator can automatically react, allowing its drive ratio to change to accommodate the reduction in transmission output speed. This means that the flow required at any instant to/from the roller control actuators 320 is not necessarily known to or predictable by the associated controller. When the variator rollers move rapidly the flow can, for brief periods, be large. A fluid supply arrangement is needed which can react suitably.

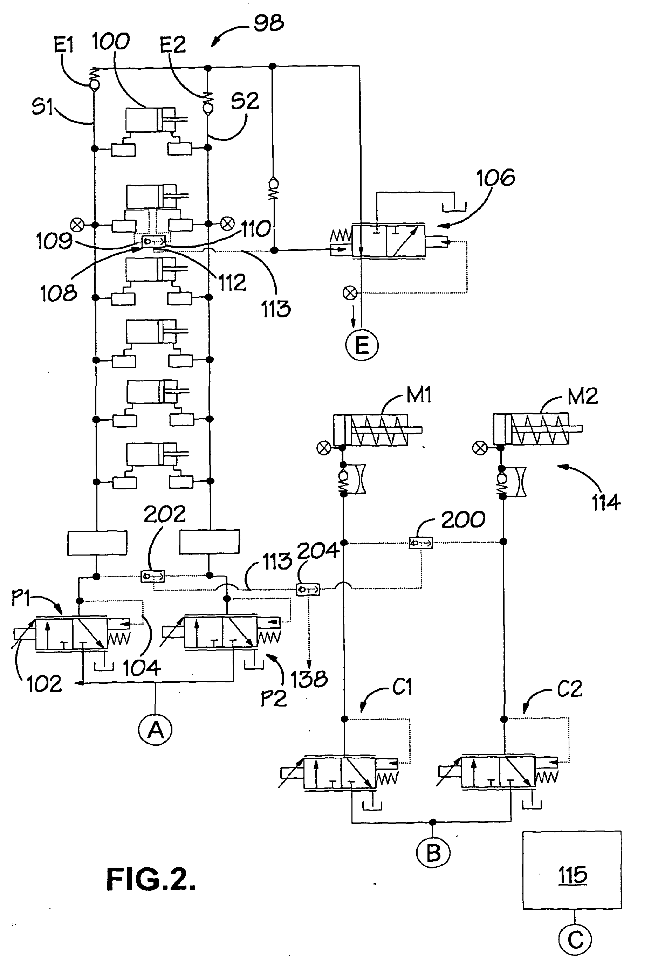

To provide traction between the rollers 320 and the races 302, 304, 306, they must be biased toward one another. This is achieved in the illustrated embodiment by a hydraulic end load actuator 334 having a cylinder 336 in which input race 304 serves as a piston. Hydraulic pressure through a line E leading to the cylinder 336 thus urges output race 304 toward the other races 302, 306. The circuit depicted in Figure 2 has a variator control system 98 which supplies controlled pressures to the variator's roller control actuators, represented in a stylised form at 100 in this drawing. As before each roller control actuator 100 is connected on one side to the first hydraulic control line S1 and on the opposite side to the second hydraulic control line S2 so that their pistons suffer a force determined by the difference between the S1, S2 pressures. Control over these pressures is exercised through proportional solenoid variator control valves P1, P2. The spool of each of these valves is acted on by opposing forces from (a) a solenoid 102 and (b) a pilot pressure taken from the valve's output through pilot line 104. In dependence on this comparison, each variator control valve P1, P2 connects its respective control line S1, S2 either to a variator supply passage A or to an exhaust passage, thereby regulating the S1, S2 pressures in accordance with the electrical signal applied to the solenoid 102.

The first and second hydraulic control lines each incorporate a respective end load supply valve E1, E2 formed as a non return valve arranged to permit flow out of the control line but not into it. The outputs of the end load supply valves E1, E2 are connected together and led to a supply input of an end load control valve 106, which is thus supplied with fluid at a pressure equal to that of the higher of the S1, S2 pressures. The end load control valve is controlled by a pilot pressure signal taken from an end load higher-pressure-wins valve arrangement 108 which samples pressures in opposite sides of one of the roller control actuators 100 and supplies whichever of these pressures is higher to the end load control valve 106. The end load control valve compares its pilot pressure signal with its own output pressure and modulates its output in response, thereby providing as its output E an end load pressure which is determined by the pilot pressure signal. This end load pressure is supplied to the end load actuator 334 (Figure 1) to provide roller/race traction. Note that the end load is thus automatically controlled to track the higher of the S1, S2 pressures, which enables the variator to operate efficiently without risk that the roller/race traction will become inadequate and permit excessive roller/race slip.

The present circuit has several higher-pressure-wins valve arrangements. Their function in each case is to receive two input pressures and to output whichever is the greater of the two. Various mechanisms can be used for this purpose, but the arrangement illustrated in Figure 2 has a pair of valve seats 109, 110 facing each other and each controlling a respective input. A single valve member, such as a ball 112, is provided between the two seats. An output passage 113 communicates with the space between the two valve seats 109, 110. The valve member seats upon and closes whichever of the inputs is at lower pressure, thereby connecting the other input passage to the output.

The hydraulic circuit of Figure 2 further comprises a clutch arrangement 114 comprising a low regime clutch M1 and a high regime clutch M2. As mentioned above, these serve to engage either of two transmission "regimes" providing different ranges of transmission ratio. Suitable gearing arrangements are known in the art and will not be presented here. Respective proportional solenoid clutch control valves C1, C2 control the pressures applied to the clutches and are each supplied with pressurised fluid through a supply passage B.

The transmission itself further comprises a lubrication system, represented in Figure 2 by box 115, with a lubrication supply passage C.

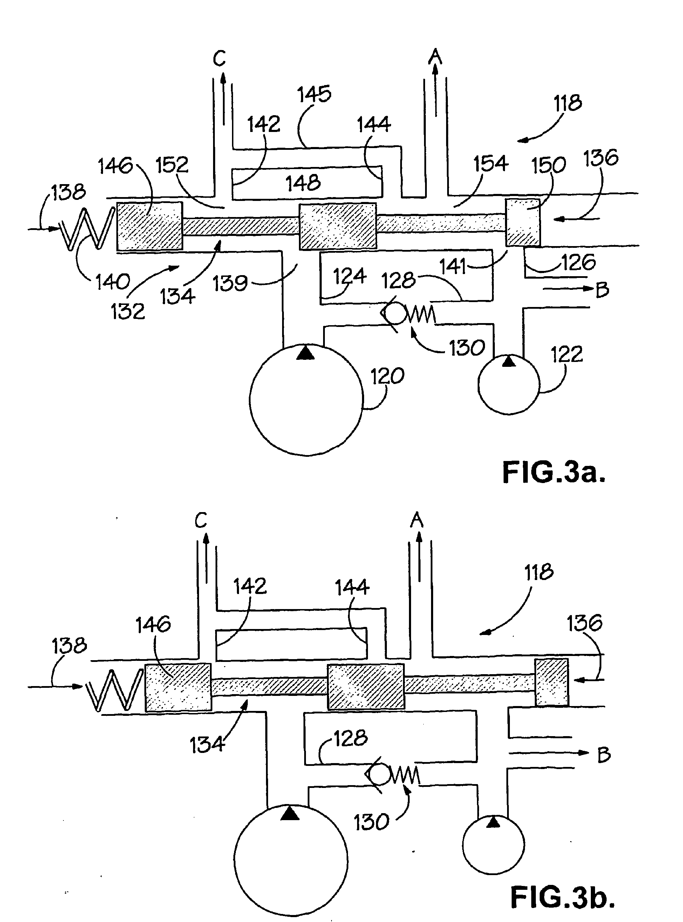

Refer now to Figures 3a through 3d which each show a fluid supply arrangement 118 embodying the present invention and intended to supply suitably pressurised hydraulic fluid/lubricant to the circuit of Figure2. It comprises a first pump 120 and a second pump 122. The outputs of the pumps are routed, by means of the associated valve arrangement seen in the drawings, in such a manner that for much of the time the first pump 120 works at low pressure, principally or exclusively to supply the lubrication system. To this end it may be a pump of relatively large flow capacity. The second pump 122 operates, for much of the time, at higher pressure than the first, but can be of smaller capacity. It serves to supply the variator control system 98 and the clutch arrangement 114 while their flow requirements are small. To this end it need only be sized to provide the flow needed to overcome leakage and to enable low rates of variator ratio change. When the variator control system 98 or the clutch arrangement 114 require higher rates of flow, the first and second pumps can work in conjunction to provide this, as will become clear.

The respective outputs 124, 126 of the first and second pumps are connectable through a transfer passage 128 incorporating a one-way transfer valve 130 which serves to connect the two outputs only when output pressure of the second pump falls below that of the first pump. Thus for much of the time, while the first pump is working at low pressure and the second pump at higher pressure, the two pumps are isolated from one another and work independently.

Of the three fluid consuming systems mentioned above (variator control system 98, clutch arrangement 114, lubrication system 115), it is considered that maintenance of fluid pressure supply to the clutch arrangement 114 takes highest priority. If events such as rapid and unexpected variator ratio changes led to inadvertent release of the active clutch, the effect could be to deprive the vehicle of propulsion at a crucial time. Also the clutch could be expected to re-engage, after an unpredictable delay, following restoration of pump pressure, with the danger that in so doing it would create a large torque spike in the transmission. This could lead to damage to the variator or other transmission components, as well as creating unpredictable vehicle behaviour.

To provide the required prioritisation of supply, the passage B forming the fluid supply to the clutch arrangement 114 is connected directly to the output 126 of the second pump 122. Because of the transfer passage 128 and the one-way transfer valve 130, the clutch supply B always receives the highest available pressure from the pumps 120, 122. In addition, supply to the lubrication system 115 and the variator control system 98 can, as will now be explained, be selectively throttled in order to maintain a suitable output pressure to the clutch arrangement 114.

Flow to both the variator control system 98 and the lubrication system 115 through supply passages A and C is controlled by a supply control valve 132 whose spool 134 receives opposed first and second pilot pressure signals which control the valve. The output pressure of the second pump 122 (which is, as noted already, always the highest available pressure from the fluid supply arrangement 118) forms the first pilot signal, being applied to the spool as indicated by arrow 136 to urge the spool 134 to the left, as seen in the drawing. The highest of the pressures in (a) hydraulic control lines S1 and S2 and (b) the clutches M1, M2 forms the second pilot signal, being applied to the spool as indicated by arrow 138 to urge the spool to the right, as viewed. A spring 140 also acts on the spool, augmenting the force applied to it by the second pilot signal.

The second pilot signal 138 is provided by use of a cascaded set of higher-pressure-wins ("HPW") valve arrangements. Looking at Figure 2, HPW valve 200 is connected to both clutches M1, M2 and so outputs the higher of the two clutch pressures. HPW valve 202 is connected to the first and second hydraulic supply lines S1, S2 and so outputs the higher of the S1 and S2 pressures. HPW valve 204 receives the outputs of the two other HPW valves 200, 202, selecting the larger of them to form the pilot signal 138.

In the present embodiment the supply control valve 132 has first and second input ports 139, 141 communicating respectively with the two outputs 124, 126 of the pumps 120, 122. It outputs and controls fluid flow through variator supply passage A to the variator control system 98 and also through lubrication supply passage C to the lubrication system 115. Note that the valve chamber has first and second lubrication supply ports 142, 144 connected through auxiliary passage 145 and both leading to the lubrication supply passage C. The first lubrication supply port 142 only receives fluid from the first pump 120. The second lubrication supply port 144 only receives fluid supplied through the input port 141 leading to the second pump 122.

The spool 134 of the supply control valve 132 has first, second and third heads 146, 148, 150 between which are formed first and second transfer chambers 152, 154 which provide two separate routes for passage of fluid between the valve's input and output ports. The first transfer chamber 152 communicates only with the input port 139 leading to the output 124 of the first pump 120. The second transfer chamber 154 communicates only with the input port 141 leading to the second pump output 126.

The various operating conditions represented in Figures 3a to 3d will now be described.

In Figure 3a pilot signal 136 is dominant and the spool 134 is thus at or toward the left hand end of its range of travel. This implies that the pressures being applied to the variator (through variator control valves P1, P2) and to the clutches (through clutch control valves C1, C2) are relatively small. In this state all the input and output ports of the supply control valve 132 are open. The first pump 120 supplies the lubrication system 115 through the first transfer chamber 152, the first lubrication supply port 142 and the lubrication supply passage C. The second pump 122 can also contribute to lubrication through the second lubrication supply port 144. The second pump 122 supplies the variator control system 98 through the second transfer chamber 154 and the variator supply passage A, as well as supplying the clutch arrangement 114 through clutch supply passage B.

Suppose now that the fluid pressure supplied by the second pump 122 begins to fall in relation to that required by the clutch arrangement 114 or the variator control arrangement 98. This may for example happen because the pressure applied to the variator or clutches increases, or because flow consumption in the circuit (e.g. due to movement of the variator roller control actuators 100) reduces the pressure created at the pump output. The effect of either is to alter the pilot signals 136, 138, moving the valve spool 134 toward the right, as viewed. As this happens, the valve progressively throttles its outputs in a predetermined sequence, as Figures 3b to 3d show.

In Figure 3b the second lubrication supply port 144 is closed, preventing any of the output of the second pump 122 from contributing to lubrication and so tending to raise the output pressure of that pump. In addition the first lubrication supply port 142 has been throttled (partially closed) by the spool head 146. When this port is throttled sufficiently to raise the output pressure of the first pump 120 to that of the second pump 122, one-way transfer valve 130 opens the transfer passage 128, again tending to raise the pressure available at the output of the second pump 122.

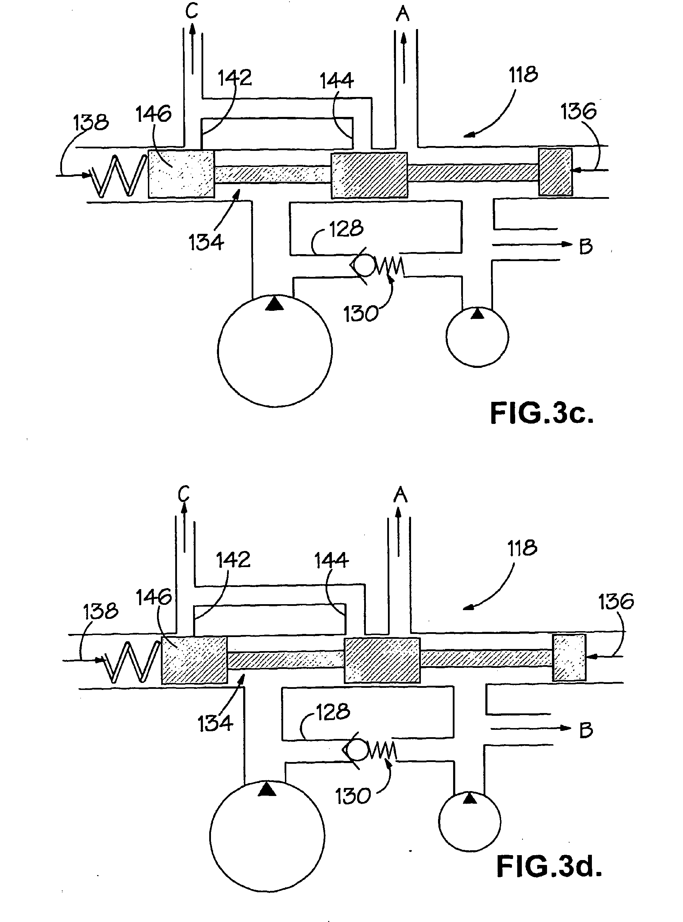

In Figure 3c the spool 134 has moved further rightward, as viewed, closing the first and second lubrication supply ports 142, 144 and so shutting off the supply of fluid for lubrication, all of the output of the two pumps thus being available to sustain pressure at the clutches and variator. Brief interruptions in lubrication supply can be tolerated without damage to the mechanics of the transmission.

In Figure 3d, the spool 134 is at or toward the right-most end of its travel, as viewed, and has additionally closed the variator supply passage A. Consequently all of the output of the first and second pumps 120, 122 is directed to the clutch arrangement 114. The expectation is that this condition will only exist briefly.

The stiffness and pre-stressing of the spring 140 are chosen by reference to the required lubrication pressure. The spring's force must be overcome by the pilot signals before lubrication flow begins to be throttled.

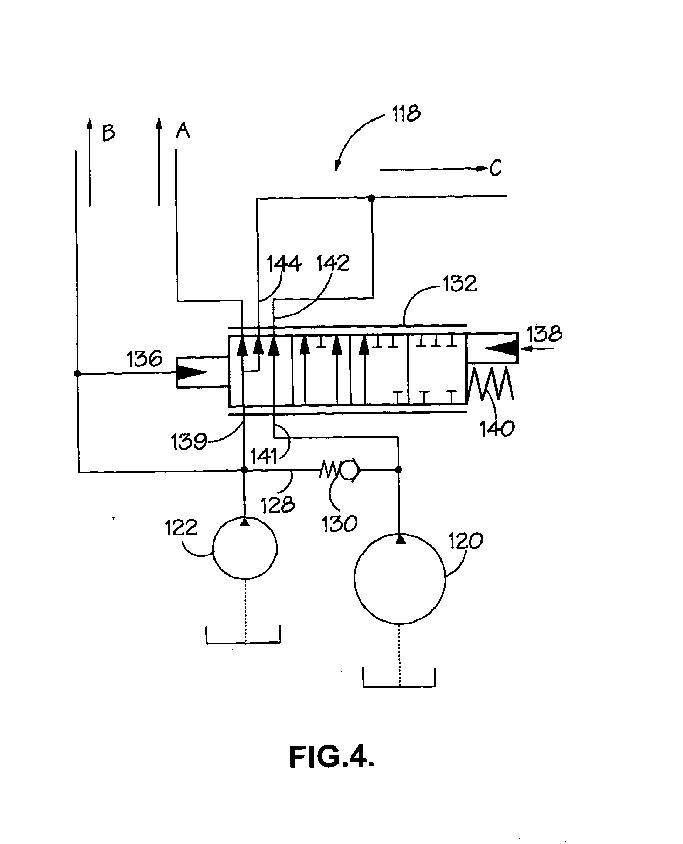

The same sequence of operations can be appreciated from Figure 4, which shows the same fluid supply arrangement 118 as Figure 3 and in which its components are given the same reference numerals. The connections formed by the supply control valve 132 in its four different states are depicted and are as follows:
1. In the state shown in the drawing, pilot signal 136 (taken from the output of the second pump 122) dominates, implying that the second pump's output pressure exceeds the pressures demanded by the variator control system 98 and the clutch arrangement 114 by some predetermined margin. First pump 120 supplies fluid to lubrication supply C and the second pump 122 also contributes to lubrication through second lubrication supply port 144. The second pump supplies the clutch arrangement 114 through supply passage B and the variator control syetm 98 through passage C.
2. A diminishing margin of pump output pressure over demanded pressure causes the valve to move to the second state in which second lubrication supply port 144 is closed.
3. Further diminution of the pump output pressure relative to demanded pressure causes the valve to adopt its third state in which supply to the lubrication system 115 is closed altogether.
4. Still further diminution of the pump output pressure relative to demanded pressure causes the valve to adopt its fourth state in which all its ports are closed and all of the output of the two pumps goes to the clutch arrangement 114.

## Claims

1. An apparatus for supplying fluid to a continuously variable transmission having a lubrication system (115) and at least one transmission control system (98), the apparatus comprising first and second pumps (120, 122), the first pump (120) having an output (124) which is connectable to the lubrication system (115) through a supply control valve arrangement (132) and the second pump (122) having an output (126) which is connectable to the transmission control system (98), **characterized in that** the apparatus further comprising a transfer passage (128) through which the first pump (120) is connectable to the transmission control system (98), and the supply control valve arrangement (132) being adapted to selectively throttle fluid supply from the output of the first pump (124) to the lubrication system (115) in order to cause fluid output from the first pump (120) to be diverted through the transfer passage (128) to the transmission control system (98).

2. An apparatus as claimed in claim 1 in which the transfer passage (128) incorporates a transfer valve (130) which permits fluid to flow from the output of the first pump (124) toward the variator control system (98) but not in the opposite direction.

3. An apparatus as claimed in claim 1 or claim 2 in which the transfer passage (128) leads from the output of the first pump (124) to the output of the second pump (126).

4. An apparatus as claimed in any preceding claim in which the supply control valve arrangement receives first and second opposed control inputs, the first control input corresponding to the pressure output from the second pump (122) and the second control input corresponding to a working pressure of the transmission control system (98), the supply control valve arrangement (132) being adapted, by throttling fluid supply from the output of the first pump (124) to the lubrication system (115) in dependence upon its control inputs, to maintain the pressure output from the second pump (122) at a level above the said working pressure of the transmission control system (98).

5. An apparatus as claimed in claim 4 comprising an arrangement of valves and passages adapted to sample fluid pressure at multiple points in the transmission control system (115) and to select the largest of the sampled pressures to form the second control input to the supply control valve arrangement (132).

6. An apparatus as claimed in any preceding claim for use with a transmission having two transmission control systems which are (a) a clutch arrangement (144) and (b) a variator control system (98).

7. An apparatus as claimed in claim 6 in which the clutch arrangement (114) has a supply passage which is constantly connected to the output of the second pump (126).

8. An apparatus as claimed in claim 6 or claim 7 in which the variator control system (98) is connectable to the second pump (122) through the supply control valve arrangement (132).

9. An apparatus as claimed in claim 8 in which the supply control valve arrangement (132) is adapted to selectively throttle supply of fluid to the variator control system (98) in order to sustain pressure to the clutch arrangement (114).

10. An apparatus as claimed in any preceding claim comprising an auxiliary passage (145) for conducting fluid output from the second pump (122) to the lubrication system (115).

11. An apparatus as claimed in claim 10 in which the supply control valve arrangement (132) is adapted to selectively throttle the auxiliary passage (145) in order to sustain pressure to the clutch arrangement (114).

12. An apparatus as claimed in any of claims 1 to 7 for use with a transmission having two transmission control systems which are (a) a clutch arrangement (114) and (b) a variator control system (98), wherein the variator control system is connectable to the second pump (122) through the supply control valve arrangement (132), the supply control valve arrangement (132) being adapted, in order to sustain pump pressure for the clutch arrangement (114), to throttle firstly the supply of fluid to the lubrication system (115) and secondly, where necessary, the supply of fluid to the variator control system (98).

13. An apparatus as claimed in any preceding claim in which the supply control valve arrangement (132) is adapted to sustain a positive margin between the output pressure of the second pump (122) and a working pressure of the transmission control system (98).

14. An apparatus as claimed in any preceding claim in which the supply control valve arrangements (132) comprises a single pilot controlled valve.

15. A transmission provided with a fluid supply apparatus according to any preceding claim.

## Patentansprüche

1. Eine Vorrichtung zur Zuführung von Fluid an ein stufenlos änderbares Getriebe mit einem Schmiersystem (115) und zumindest einem Getriebe-Steuersystem (98), wobei die Vorrichtung erste und zweite Pumpen (120, 122) umfasst, von denen die erste Pumpe (120) einen Ausgang (124) aufweist, der mit dem Schmiersystem (115) über eine Zuführungs-Steuerventil-Anordnung (132) verbindbar ist, während die zweite Pumpe (122) einen Ausgang (126) aufweist, der mit dem Getriebe-Steuersystem (98) verbindbar ist, **dadurch gekennzeichnet, dass** die Vorrichtung weiterhin einen Überführungs-Kanal (128) aufweist, über den die erste Pumpe (120) mit dem Getriebe-Steuersystem (98) verbindbar ist, und dass die Zuführungs-Steuerventil-Anordnung (132) zum selektiven Drosseln der Fluid-Zufuhr von dem Ausgang der ersten Pumpe (124) an das Schmiersystem (115) ausgebildet ist, um eine Umlenkung des Fluid-Ausganges von der ersten Pumpe (120) über den Überführungs-Kanal (128) an das Getriebe-Steuersystem (98) zu bewirken.

2. Eine Vorrichtung nach Anspruch 1, bei der der Überführungs-Kanal (128) ein Überführungs-Ventil (130) beinhaltet, das es dem Fluid ermöglicht, von dem Ausgang der ersten Pumpe (124) in Richtung auf das Variator-Steuersystem (98) zu strömen, jedoch nicht in der entgegengesetzten Richtung.

3. Eine Vorrichtung nach Anspruch 1 oder 2, bei der der Überführungs-Kanal (128) von dem Ausgang der ersten Pumpe (124) zu dem Ausgang der zweiten Pumpe (126) führt.

4. Eine Vorrichtung nach einem der vorhergehenden Ansprüche, bei der die Zuführungs-Steuerventil-Anordnung erste und zweite entgegengesetzte Steuereingänge empfängt, wobei der erste Steuereingang dem Druckausgang von der zweiten Pumpe (122) entspricht, und der zweite Steuereingang einem Arbeitsdruck des Getriebe-Steuersystems (98) entspricht, wobei die Zuführungs-Steuerventil-Anordnung (132) durch Drosseln der Fluid-Zufuhr von dem Ausgang der erste Pumpe (124) an das Schmiersystem (115) in Abhängigkeit von ihren Steuereingängen zur Aufrechterhaltung des Druckausganges von der zweiten Pumpe (122) auf einen Pegel oberhalb des Arbeitsdruckes des Getriebe-Steuersystems (98) ausgebildet ist.

5. Eine Vorrichtung nach Anspruch 4, die eine Anordnung von Ventilen und Kanälen aufweist, die zur Abtastung des Strömungsmitteldruckes an mehrfachen Punkten in dem Getriebe-Steuersystem (115) und zur Auswahl des größten der abgetasteten Drücke zur Bildung des zweiten Steuereinganges an die Zuführungs-Steuerventil-Anordnung (132) ausgebildet ist.

6. Eine Vorrichtung nach einem der vorhergehenden Ansprüche zur Verwendung mit einem Getriebe, das zwei Getriebe-Steuersysteme aufweist, die (a) eine Kupplungsanordnung (144) und (b) ein Variator-Steuersystem (98) sind.

7. Eine Vorrichtung nach Anspruch 6, bei der die Kupplungsanordnung (114) einen Zufuhr-Kanal aufweist, der dauernd mit dem Ausgang der zweiten Pumpe (126) verbunden ist.

8. Eine Vorrichtung nach Anspruch 6 oder 7, bei der das Variator-Steuersystem (98) mit der zweiten Pumpe (122) über die Zuführungs-Steuerventil-Anordnung (132) verbindbar ist.

9. Eine Vorrichtung nach Anspruch 8, bei der die Zuführungs-Steuerventil-Anordnung (132) zum selektiven Drosseln der Zufuhr von Fluid an das Variator-Steuersystem (98) ausgebildet ist, um den Druck an die Kupplungsanordnung (114) aufrecht zu erhalten.

10. Eine Vorrichtung nach einem der vorhergehenden Ansprüche, die einen Hilfs-Kanal (145) zum Leiten von Fluid-Ausgang von der zweiten Pumpe (122) an das Schmiersystem (115) umfasst.

11. Eine Vorrichtung nach Anspruch 10, bei der die Zuführungs-Steuerventil-Anordnung (132) zum selektiven Drosseln des Hilfs-Kanals (145) ausgebildet ist, um einen Druck an die Kupplungsanordnung (114) aufrecht zu erhalten.

12. Eine Vorrichtung nach einem der Ansprüche 1 bis 7 zur Verwendung mit einem Getriebe, das zwei Getriebe-Steuersysteme aufweist, die (a) eine Kupplungsanordnung (114) und (b) ein Variator-Steuersystem (98) sind, wobei das Variator-Steuersystem mit der zweiten Pumpe (122) über die Zuführungs-Steuerventil-Anordnung (132) verbindbar ist, wobei die Zuführungs-Steuerventil-Anordnung (132) zum Aufrechterhalten eines Pumpendrucks für die Kupplungsanordnung (114) erstens zum Drosseln der Zufuhr von Fluid an das Schmiersystem (115) und zweitens, sofern erforderlich, der Zufuhr von Fluid an das Variator-Steuersystem (98) ausgebildet ist.

13. Eine Vorrichtung nach einem der vorhergehenden Ansprüche, bei der die Zuführungs-Steuerventil-Anordnung (132) zur Aufrechterhaltung einer positiven Differenz zwischen dem Ausgangsdruck der zweiten Pumpe (122) und einem Arbeitsdruck des Getriebe-Steuersystems (98) ausgebildet ist.

14. Eine Vorrichtung nach einem der vorhergehenden Ansprüche, bei der die Zuführungs-Steuerventil-Anordnung (132) ein einziges Pilot-gesteuertes Ventil umfasst.

15. Ein Getriebe, das mit einer Fluid-Zuführungs-Vorrichtung nach einem der vorhergehenden Ansprüche versehen ist.

## Revendications

1. Appareil d'alimentation en fluide d'une transmission à variation continue ayant un système de lubrification (115) et au moins un système de commande de transmission (98), l'appareil comprenant des première et seconde pompes (120, 122), la première pompe (120) ayant une sortie (124) qui peut être raccordée au système de lubrification (115) par un agencement de valve de régulation d'alimentation (132) et la seconde pompe (122) ayant une sortie (126) qui peut être raccordée au système de commande de transmission (98), **caractérisé en ce que** l'appareil comprend en outre un passage de transfert (128) par le biais duquel la première pompe (120) peut être raccordée au système de commande de transmission (98), et l'agencement de valve de régulation d'alimentation (132) étant adapté pour étrangler sélectivement l'alimentation en fluide, à partir de la sortie de la première pompe (124) jusqu'au système de lubrification (115) afin d'amener la sortie de fluide de la première pompe (120) à être déviée par le passage de transfert (128) vers le système de commande de transmission (98).

2. Appareil selon la revendication 1, dans lequel le passage de transfert (128) contient une valve de transfert (130) qui permet au fluide de s'écouler à partir de la sortie de la première pompe (124) vers le système de commande de variateur (98), mais pas dans la direction opposée.

3. Appareil selon la revendication 1 ou la revendication 2, dans lequel le passage de transfert (128) conduit de la sortie de la première pompe (124) jusqu'à la sortie de la seconde pompe (126).

4. Appareil selon l'une quelconque des revendications précédentes, dans lequel l'agencement de valve de régulation d'alimentation reçoit des première et seconde entrées de commande opposées, la première entrée de commande correspondant à la sortie de pression de la seconde pompe (122) et la seconde entrée de commande correspondant à une pression de travail du système de commande de transmission (98), l'agencement de valve de régulation d'alimentation (132) étant adapté, en étranglant l'alimentation en fluide à partir de la sortie de la première pompe (124) jusqu'au système de lubrification (115) en fonction de ses entrées de commande, pour maintenir la sortie de pression de la seconde pompe (122) à un niveau supérieur à ladite pression de travail du système de commande de transmission (98).

5. Appareil selon la revendication 4, comprenant un agencement de valves et de passages adapté pour échantillonner la pression de fluide à plusieurs points dans le système de commande de transmission (115) et pour sélectionner les plus grandes pressions échantillonnées afin de former la seconde entrée de commande pour l'agencement de valve de régulation d'alimentation (132).

6. Appareil selon l'une quelconque des revendications précédentes, destiné à être utilisé avec une transmission ayant deux systèmes de commande de transmission qui sont (a) un agencement d'embrayage (144) et (b) un système de commande de variateur (98).

7. Appareil selon la revendication 6, dans lequel l'agencement d'embrayage (114) a un passage d'alimentation qui est constamment raccordé à la sortie de la seconde pompe (126).

8. Appareil selon la revendication 6 ou la revendication 7, dans lequel le système de commande de variateur (98) peut être raccordé à la seconde pompe (122) par le biais de l'agencement de valve de régulation d'alimentation (132).

9. Appareil selon la revendication 8, dans lequel l'agencement de valve de régulation d'alimentation (132) est adapté pour étrangler sélectivement l'alimentation en fluide vers le système de commande de variateur (98) afin de maintenir la pression pour l'agencement d'embrayage (114).

10. Appareil selon l'une quelconque des revendications précédentes, comprenant un passage auxiliaire (145) pour amener la sortie de fluide de la seconde pompe (122) au système de lubrification (115).

11. Appareil selon la revendication 10, dans lequel l'agencement de valve de régulation d'alimentation (132) est adapté pour étrangler sélectivement le passage auxiliaire (145) afin de maintenir la pression sur l'agencement d'embrayage (114).

12. Appareil selon l'une quelconque des revendications 1 à 7, destiné à être utilisé avec une transmission ayant deux systèmes de commande de transmission qui sont (a) un agencement d'embrayage (114) et (b) un système de commande de variateur (98), dans lequel le système de commande de variateur peut être raccordé à la seconde pompe (122) par le biais de l'agencement de valve de régulation d'alimentation (132), l'agencement de valve de régulation d'alimentation (132) étant adapté, afin de maintenir la pression de pompe pour l'agencement d'embrayage (114), étrangler premièrement l'alimentation en fluide vers le système de lubrification (115) et deuxièmement, lorsque cela est nécessaire, l'alimentation en fluide vers le système de commande de variateur (98).

13. Appareil selon l'une quelconque des revendications précédentes, dans lequel l'agencement de valve de régulation d'alimentation (132) est adapté pour maintenir une marge positive entre la pression de sortie de la seconde pompe (122) et une pression de travail du système de commande de transmission (98).

14. Appareil selon l'une quelconque des revendications précédentes, dans lequel l'agencement de valve de régulation d'alimentation (132) comprend une valve unique à commande pilote.

15. Transmission dotée d'un appareil d'alimentation de fluide selon l'une quelconque des revendications précédentes.
